# EUROPÄISCHE PATENTANMELDUNG

(11) **EP 2 450 500 A2**
(43) Veröffentlichungstag der Anmeldung: **09.05.2012**
(21) Anmeldenummer: 11155346.7
(22) Anmeldetag: 22.02.2011
(51) Int. Cl.: E04F 17/08

(54) **Wandverkleidungsmodul**

(30) Priorität: 05.11.2010 DE 102010050568
(71) Anmelder: WIBU Wirtschaftsbund sozialer Einrichtungen eG, 22926 Ahrensburg (DE)
(72) Erfinder: Baier, Helmut, 85778, Haimhausen (DE)
(74) Vertreter: Kruspig, Volkmar

(57) **Zusammenfassung**

Die Erfindung betrifft ein Wandverkleidungsmodul, bestehend aus einer Vielzahl von rahmenartigen Paneelen, welche über eine Vorhangkonstruktion rauminnenseitig in einem Gebäude befestigbar sind, wobei mindestens ein Paneel einen Aufnahmeraum für insbesondere elektrische Anschluss- und Versorgungsleitungen bildet und wobei weiterhin an der Paneelfront und/oder Seitenfläche Schalter, Displays und/oder Anschlusssteckeinrichtungen oder dergleichen Mittel befindlich sind.

Erfindungsgemäß sind die Anschluss- und Versorgungsleitungen zu einem Kabelbaum zusammengefasst, wobei die Länge des Kabelbaums ein Versetzen des jeweiligen mit den Schaltern, Displays und/oder Anschusssteckeinrichtungen versehenden Paneels an einen beliebigen Ort der jeweiligen Vorhangkonstruktion und dem daran fixierten Paneelrahmen ermöglicht.

## Beschreibung

Die Erfindung betrifft ein Wandverkleidungsmodul, bestehend aus einer Vielzahl von rahmenartigen Paneelen, welche über eine Vorhangkonstruktion rauminnenseitig in einem Gebäude befestigbar sind, wobei mindestens ein Paneel einen Aufnahmeraum für insbesondere elektrische Anschluss- und Versorgungsleitungen bildet und wobei weiterhin an der Paneelfront- und/oder Seitenfläche Schalter, Displays und/oder Anschlussstreckeinrichtungen befindlich sind, gemäß Oberbegriff des Patentanspruchs 1.

Aus der US 2003/0177713 A1 ist eine modulare Wandkonstruktion, enthaltend eine medizinische Serviceeinheit vorbekannt.

Die dortige Konstruktion nimmt eine Vielzahl von Bedien- und Versorgungselementen auf und kann in der Nähe eines Kranken- oder Pflegebettes, insbesondere höhenverstellbar befestigt werden.

Aus dem deutschen Gebrauchsmuter DE 20 2005 008 335 U1 ist ein Wandverkleidungssystem mit an einer Tragkonstruktion befestigten Platten vorbekannt, wobei die Platten jeweils eine von der Tragkonstruktion abgewandte Vorderseite aufweisen. Zwischen zwei benachbarten Platten ist eine Fuge gebildet, wobei die Fuge ein einstückiges und bündig mit den Vorderseiten der Platten abschließendes Dichtungsprofil aufnimmt. Hierdurch treten im Wesentlichen keine Kanten auf und es ist die Wandverkleidungsoberfläche nahezu frei von Unebenheiten, in denen sich Verschmutzungen ansammeln können. Eine derartige Verkleidung ist insbesondere auch für hoch hygienische Räumlichkeiten geeignet.

Das Wandverkleidungsmodul zur Verkleidung eines Innenraumes gemäß DE 20 2008 013 181 U1 ist mit seiner Rückseite an einer zu verkleidenden Raumwand festlegbar. Weiterhin ist eine von der Rückseite beabstandete Vorderwand vorhanden.

Zwischen der Rückseite und der Vorderwand ist ein Aufnahmeraum ausgebildet, in dem sich mehrere Versorgungsleitungen erstrecken, die jeweils mit einer an einer Außenfläche angeordneten verbraucherseitigen Anschlusssteckeinrichtung in Verbindung stehen.

Gemäß der dortigen Lösung sind die verbraucherseitigen Anschlusssteckeinrichtungen an einem Seitenrandbereich vorgesehen, der den Aufnahmeraum begrenzt.

Mit dem vorgestellten Wandverkleidungsmodul sind die Anschlusssteckeinrichtungen insbesondere dann, wenn ein Kopfende eines Krankenbettes an die Vorderwand herangeschoben ist, vom Kopfende des Bettes weg gerichtet und von der Frontseite her nicht einsehbar.

Bei einer Ausführungsform nach DE 20 2008 013 181 U1 ist die Rückseite durch eine geschlossene Rückwand gebildet. Die Seitenwände stehen bei der diesbezüglichen Ausführungsform an jeweils einem seitlichen Rand der Vorderwand quer zu dieser und verbinden die Vorderwand mit der Rückwand. Hierdurch wird ein horizontal zu allen Seiten geschlossener Aufnahmeraum gebildet, in dem vormontierte Versorgungsleitungen gut geschützt und nach außen hin nicht sichtbar untergebracht sind. Dieses geschlossene Modul ist standfähig und kann an verschiedenen Positionen im Raum eingesetzt werden.

Aus dem Vorgenannten ist es Aufgabe der Erfindung, ein weiter entwickeltes Wandverkleidungsmodul, bestehend aus einer Vielzahl von rahmenartigen Paneelen, welche über eine Vorhangkonstruktion rauminnenseitig in einem Gebäude befestigbar sind, anzugeben, welches je nach momentan vorliegender oder ggfl. geänderter Raumnutzungssituation einen variablen Zugang zu Anschluss- und Versorgungseinheiten bietet, die in dem Modul untergebracht bzw. dort integriert sind.

Das zu schaffende Wandverkleidungsmodul soll nicht nur bei der Konzeption neuer Gebäude Anwendung finden, sondern auch zur Nachrüstung im Rahmen anstehender Sanierungen von Gebäuden genutzt werden. Weiterhin soll es gelingen, eine Mobilität insofern sicherzustellen, dass nach jeweiliger Nutzungssituation und dem Aufstellungsort von Pflegebetten Schalter, Displays und/oder Anschlusssteckeinrichtungen optimal zugänglich sind. Dabei ist es Ziel der Erfindung, dass notwendige Umbau- und Umrüstarbeiten ohne Elektrofachkräfte, sondern bereits vom Pflegepersonal und überwiegend werkzeugfrei vorgenommen werden können.

Die Lösung der Aufgabe der Erfindung erfolgt durch ein Wandverkleidungsmodul, bestehend aus einer Vielzahl von rahmenartigen Paneelen, welche über eine Vorhangkonstruktion rauminnenseitig in einem Gebäude befestigbar sind, gemäß der Merkmalskombination nach Patentanspruch 1, wobei die Unteransprüche mindestens zweckmäßige Ausgestaltungen und Weiterbildungen darstellen.

Es wird demnach von einem Wandverkleidungsmodul, bestehend aus einer Vielzahl von rahmenartigen Paneelen, welche über eine Vorhangkonstruktion rauminnenseitig in einem Gebäude befestigbar sind, ausgegangen, wobei mindestens ein Paneel einen Aufnahmeraum für insbesondere elektrische Anschluss- und Versorgungsleitungen bildet und wobei weiterhin an der Paneelfront und/oder Seitenfläche Schalter, Displays und/oder Anschlusssteckeinrichtungen befindlich sind.

Erfindungsgemäß sind die Anschluss- und Versorgungsleitungen zu einem Kabelbaum zusammengefasst und elektrisch anschlussseitig vorinstalliert.

Die Länge des Kabelbaumes ist so ausgeführt, dass ein Versetzen des jeweiligen mit den Schaltern, Displays und/oder Anschlusssteckeinrichtungen versehenen Paneelen an einem beliebigen Ort der jeweiligen Vorhangkonstruktion und den daran fixierten Paneelrahmen möglich wird.

Es kann demnach erfindungsgemäß ein mit den entsprechenden Anschlusseinrichtungen versehenes Paneel aus dem Wandverkleidungsmodul entnommen und an einer räumlich anderen Stelle wieder in das Modul eingesetzt werden. Durch einen derartigen örtlichen Tausch entsprechender Paneelfrontplatten kann der mit dem Modul versehene Raum an eine geänderte Nutzungssituation bzw. eine geänderte Belegungssituation mit Blick auf die Aufstellung von Pflegebetten angepasst werden.

Bei einer Ausgestaltung der Erfindung weisen die Paneelrahmen Aussparungen oder Durchbrüche zur Aufnahme des Kabelbaums, welcher die Anschluss- und Versorgungsleitungen umfasst, auf.

Entsprechend der zu ändernden Ortsposition der jeweiligen Paneelfront mit Anschlusssteckeinrichtungen wird der Kabelbaum in die vorhandenen Aussparungen oder Durchbrüche eingelegt und hierdurch lagegesichert.

Ausgestaltend besitzen die Paneelrahmen vorderseitig Rastausnehmungen, zur Aufnahme von Rastnasen, wobei die Rastnasen an der Rückseite der jeweiligen Paneelfrontplatte ausgebildet sind.

Die jeweils eingehängten Paneelfrontplatten sind gegen ein Herausheben durch eine rahmenseitig überstehende, obere Abdeckplatte gesichert.

Bei einer bevorzugten Ausführungsform wird über die Vorhangkonstruktion das Wandverkleidungsmodul so an der jeweiligen Gebäudeinnenseite befestigt, dass der Paneelrahmen zum Raumboden in einem Abstand steht.

Das Rahmenunterteil der erfindungsgemäßen Konstruktion weist bei einer Ausgestaltung einen Durchbruch zur Aufnahme eines zum Raumboden strahlenden Leuchtmittels auf. Hierdurch ist in sehr einfacher Weise eine ästhetisch ansprechende und wirksame Nachtbeleuchtung realisierbar.

Erfindungsgemäß besteht die Möglichkeit, dass die Paneelfrontplatten Solldurchbrüche zur Aufnahme von Schaltern, Displays und/oder Anschlusssteckeinrichtungen umfassen, wobei diese bei Nichtgebrauch mit einer von der Frontseite her nicht entfernbaren Abdeckung verschließbar sind. Es können bei der Umsetzung dieser Erfindungsidee quasi Standardpaneelfrontplatten geschaffen werden, die in dem jeweiligen Umfang vorverdrahtet notwendige Schalter, Displays und/oder Anschlusssteckeinrichtungen aufnehmen können.

Dabei liegt es im Sinne der Erfindung, dass die von der Frontseite her nicht ohne weiteres entfernbaren Abdeckungen auch ein Designelement des gesamten Wandverkleidungsmoduls darstellen.

Wiederum ausgestaltend ist mindestens eine der Paneelfronplatten mit einem Abschnitt zum Fixieren einer Magnetfolie oder eines Magnetschildes versehen, so dass die Möglichkeit besteht, Hinweise und/oder Bedienungsangaben an beliebiger Stelle des Wandverkleidungsmoduls anzubringen und diese aber auch beschädigungsfrei wieder zu entfernen.

Ergänzend kann innerhalb des Aufnahmeraumes des Wandverkleidungsmoduls ein Feuchtigkeitsdetektor und/oder eine Fehlerstromschutzeinrichtung angeordnet werden, um bei einem versehentlichen Eindringen von Feuchtigkeit die elektrische Betriebsanlage, sofern diese nicht unter Schutzkleinspannung steht, abzuschalten.

Zur knickfreien Verlegung ist der Kabelbaum in einer stabilisierenden Hülle geführt und aufgenommen. Diese stabilisierende Hülle verhindert eine Beschädigung der aufgenommenen elektrischen Kabel bei einem Versetzen eines entsprechenden Paneels und sorgt gleichzeitig für eine straffe aber beschädigungsfreie Aufnahme in den Aussparungen oder Durchbrüchen im Paneelrahmen der entsprechenden Rahmenaneinanderreihung zum Erhalt eines entsprechend räumlich ausgedehnten Wandverkleidungsmoduls.

Die Erfindung soll nachstehend anhand eines Ausführungsbeispiels sowie unter Zuhilfenahme von Figuren näher erläutert werden.

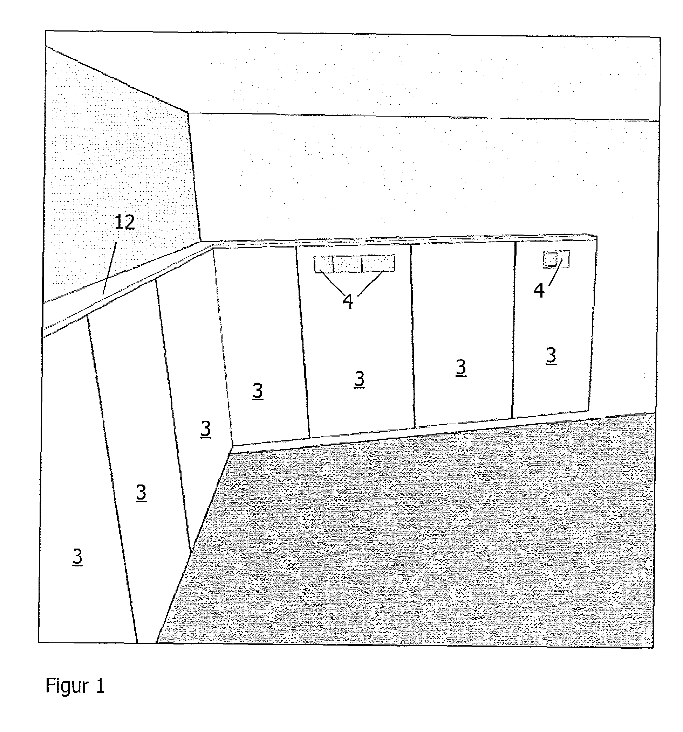

Figur 1 zeigt eine Darstellung eines Eckbereiches eines Gebäudeinnenraumes mit vollständig montiertem Wandverkleidungsmodul umfassend mehrere Einzelpaneele mit entsprechenden Paneelfronten, wobei die in der Bildmitte und bildrechtsseitig gezeigten Paneelfronten elektrische Anschlusssteckeinrichtungen sowie Schalter bzw. ein Display oder aber auch eine Rufanlage aufnehmen.

Aus der Figur 1 ist auch ersichtlich, dass die Paneele nebst darunter befindlicher Rahmenkonstruktion (siehe z.B. Figur 2) in einem Abstand vom Raumfußboden befestigt sind, was einerseits die Reinigungsarbeiten erleichtert und zum anderen eine Möglichkeit zur Anordnung eines Nachtlichts (siehe Figur 3 und Figur 4) schafft.

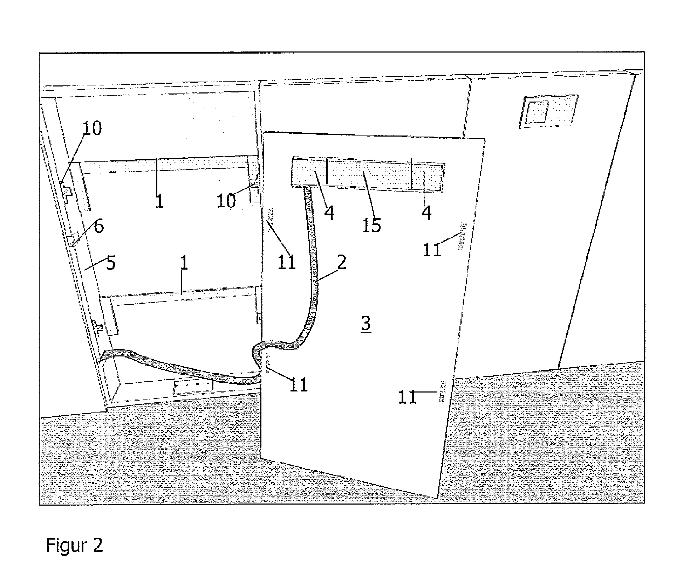

Bei der Detaildarstellung nach Figur 2 ist ein Teilbereich des Wandverkleidungsmoduls gemäß Figur 1 (dort rechter Bildteil) gezeigt.

Das Wandverkleidungsmodul besteht aus einer Vielzahl von rahmenartigen Paneelen, die über eine Vorhangkonstruktion 1 rauminnenseitig in einem Gebäude befestigbar sind.

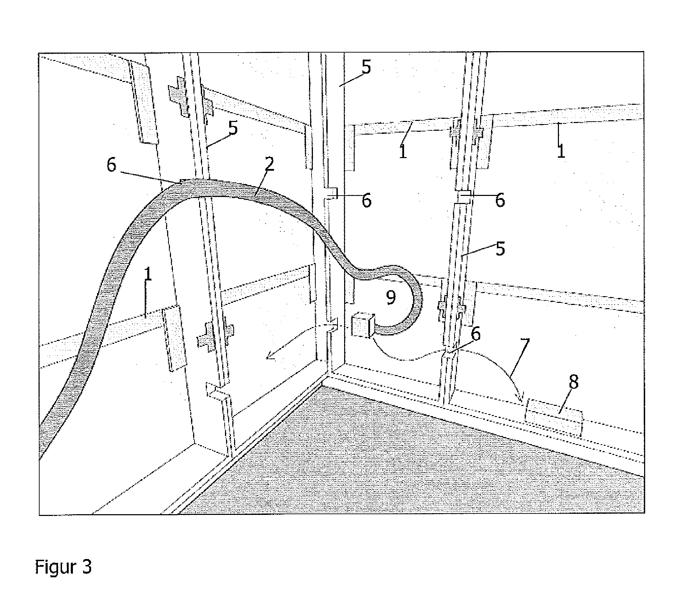

Mindestens ein Paneel bildet hier einen Aufnahmeraum für insbesondere elektrische Anschluss- und Versorgungsleitungen. Die Anschluss- und Versorgungsleitungen sind gemäß der Darstellung nach Figur 2, 3 und 4 zu einem Kabelbaum 2 zusammengefasst.

Die Länge des Kabelbaums 2 ist so gewählt, dass ein Versetzen des jeweiligen mit den Schaltern, Displays und/oder Anschlusssteckeinrichtungen versehenen Paneele an einen beliebigen anderen Ort der jeweiligen Vorhangkonstruktion möglich ist.

Letzteres wird aus der Zusammenschau der Figuren 2, 3 und 4 deutlich.

In der Darstellung nach Figur 2 ist auch erkennbar, wie in die jeweilige Paneelfrontplatte 3 Anschlusssteckeinrichtungen, Schalter oder dergleichen elektrische Einrichtungen 4 integriert sind.

Die Paneelrahmen 5 weisen weiterhin Aussparungen 6 oder Durchbrüche zur Aufnahme des Kabelbaums 2 bzw. sonstiger elektrischen Leitungen 7, z.B. zur Stromversorgung eines Nachtlichts 8, welches nach unten zur Fußbodenleiste des Raumes strahlt, auf.

Die jeweiligen Kabelbäume 2 sind elektrisch über Verteilerdosen und ggfl. Kupplungen 9 mit dem Hausstromversorgungsnetz fest verbunden.

Bei einem Versetzen einer entsprechenden Paneelfrontplatte 3 von einem Ort A an einen Ort B muss diese elektrische Anschlussverbindung nicht aufgetrennt und im Vorfeld stromfrei geschalten werden.

Am Paneelrahmen 5 sind Rastelemente 10 vorhanden, die mit Rastnasen 11, die in der Paneelfrontplatte 3 befindlich sind, zusammen wirken.

Durch die Mittel 10 und 11 können die entsprechenden Paneelfrontplatten in den Paneelrahmen eingesetzt und dort fixiert werden.

Eine in der Figur 1 gezeigte durchgehende Abdeckplatte 12 verhindert ein unerwünschtes Herausheben einer entsprechenden Paneelfrontplatte 3.

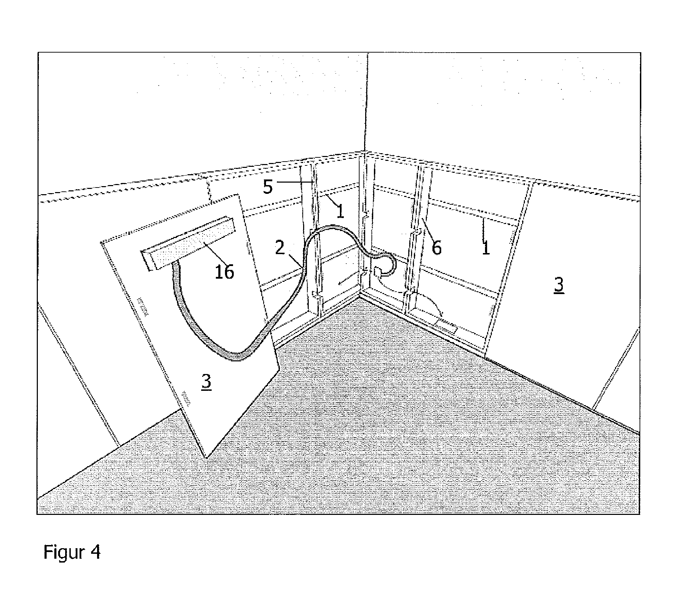

Die einzelnen Paneelfrontplatten 3 können ein verschiedenes Dekor auch in einer Schmuckvariante gemäß Figur 4 umfassen.

Die Figur 4 zeigt die sehr ansprechende Wirkung der Leuchtmittel des Nachtlichts 8 hin zum Fußbodenbereich des Raumes. Wie aus der Figur 4 ebenfalls noch deutlich wird, ist die Länge des Kabelbaumes 2 so gewählt, dass das in der Darstellung nach Figur 4 entnommene Paneel 3 sowohl bezogen auf die in Bildmitte verlaufende Raumecke links- oder rechtsseitig in einen entsprechenden Rahmen einsetzbar ist.

Hierdurch ist quasi ein mobiles Medienanschlusspaneel geschaffen, dass eine Umstellung von Pflegebetten in einem entsprechenden Raum ohne den bisherigen Montage- bzw. Verlegeaufwand für elektrische Anschlüsse ermöglicht. Das mobile Medienanschlusspaneel hat dabei grundsätzlich die Form der übrigen Wandverkleidungspaneele. Die Paneelsegmente können vom Schwesternpersonal aber auch von anderen Hilfskräften, die keine Befähigungen oder Befugnisse des Elektrohandwerks besitzen, umgesetzt werden.

Die flexiblen Kabelbäume, in dem die verschiedenen Medienanschlüsse zusammen gefasst werden, sind an einem zentralen Paneelsegment mit den vorhandenen Hausanschlüssen entweder über Steckverbinder oder aber auch festverdrahtet verbunden.

Aufgrund des hängenden Systems wie insbesondere in den Figuren ersichtlich, kann unterseitig blendfrei ein Nachlicht integriert werden. Grundsätzlich besteht die Möglichkeit, eine Schalteinrichtung zum Quittieren des Schwesternrufs in das Paneel zu integrieren, so dass auf eine separate Verkabelung verzichtet werden kann.

Das jeweilige Paneel mit den Medienanschlüssen ist den elektrotechnischen Vorschriften entsprechend Feuchte geschützt ausgeführt und kann ergänzend eine Fehlerstromschutzeinrichtung und/oder einen Feuchtigkeitsdetektor umfassen, um die hier verkörperte elektrische Betriebsanlage stromlos zu schalten.

Die Kabelbaumhülle des Kabelbaums 2 ist derart ausgeführt, dass eine knickfreie Verlegung der Kabel möglich wird und wobei die Hülle ergänzend für einen sicheren Halt in den diesbezüglichen Aussparungen 6 im jeweiligen Paneelrahmen 5 sorgt.

Über Blinddurchbrüche, die frontseitig verdeckt sind (siehe z.B. Blinddurchbruch 15) nach Figur 2 können ergänzende elektrische Anschlusselemente, Steckeinrichtungen und/oder Displays 16 (siehe Figur 4) integriert werden.

## Patentansprüche

1. Wandverkleidungsmodul, bestehend aus einer Vielzahl von rahmenartigen Paneelen, welche über eine Vorhangkonstruktion rauminnenseitig in einem Gehäuse befestigbar sind, wobei mindestens ein Paneel einen Aufnahmeraum für insbesondere elektrische Anschluss- und Versorgungsleitungen bildet und wobei weiterhin an der Paneelfront- und/oder -seitenfläche Schalter, Displays und oder Anschlusssteckeinrichtungen oder dergleichen Mittel befindlich sind,
**dadurch gekennzeichnet, dass**
die Anschluss- und Versorgungsleitungen zu einem Kabelbaum zusammen gefasst sind, wobei die Länge des Kabelbaums ein Versetzen des jeweiligen mit den Schaltern, Displays und/oder Anschlusssteckeinrichtungen versehenen Paneels an einen beliebigen Ort der jeweiligen Vorhangkonstruktion und dem daran fixierten Paneelrahmen ermöglicht.

2. Wandverkleidungsmodul nach Anspruch 1,
**dadurch gekennzeichnet, dass**
die Paneelrahmen Aussparungen oder Durchbrüche zur Aufnahme des Kabelbaums aufweisen.

3. Wandverkleidungsmodul nach Anspruch 1 oder 2
**dadurch gekennzeichnet, dass**
die Paneelrahmen vorderseitig Rastausnehmungen zur Aufnahme von Rastnasen besitzen, wobei die Rastnasen an der Rückseite der jeweiligen Paneelfrontplatten ausgebildet sind.

4. Wandverkleidungsmodul nach Anspruch 3,
**dadurch gekennzeichnet, dass**
die jeweils eingehängten Paneelfrontplatten gegen Herausheben durch eine rahmenseitig überstehende, obere Abdeckplatte gesichert sind.

5. Wandverkleidungsmodul nach einem der vorangegangen Ansprüche,
**dadurch gekennzeichnet, dass**
der Paneelrahmen zum Raumboden in einem Abstand an der Vorhangkonstruktion befestigt ist.

6. Wandverkleidungsmodul nach Anspruch 5,
**dadurch gekennzeichnet, dass**
das Rahmenunterteil einen Durchbruch zur Aufnahme eines zum Rahmenboden strahlenden Leuchtmittels aufweist.

7. Wandverkleidungsmodul nach einem der vorangegangenen Ansprüche,
**dadurch gekennzeichnet, dass**
die Paneelfrontplatten Solldurchbrüche zur Aufnahme von Schaltern, Displays und/oder Anschlusssteckeinrichtungen umfassen, wobei diese bei Nichtgebrauch mit einer von der Frontseite her nicht entfernbaren Abdeckung verschließbar sind.

8. Wandverkleidungsmodul nach einem der vorangegangenen Ansprüche,
**dadurch gekennzeichnet, dass**
mindestens eine der Paneelfrontplatten einen Abschnitt zum Fixieren einer Magnetfolie oder eines Magnetschildes mit Hinweis und/oder Bedienungsangaben aufweist.

9. Wandverkleidungsmodul nach einem der verangegangenen Ansprüche,
**dadurch gekennzeichnet, dass**
im Aufnahmeraum ein Feuchtigkeitsdetektor und/oder eine Fehlerstromschutzeinrichtung befindlich ist.

10. Wandverkleidungsmodul nach einem der vorangegangenen Ansprüche,
**dadurch gekennzeichnet, dass**
zur knickfreien Verlegung der Kabelbaum in einer stabilisierenden Hülle geführt und aufgenommen ist.
